# EUROPÄISCHE PATENTSCHRIFT

(11) **EP 0 651 231 B1**
(45) Veröffentlichungstag und Bekanntmachung des Hinweises auf die Patenterteilung: **18.06.1997**
(21) Anmeldenummer: 94113029.6
(22) Anmeldetag: 20.08.1994
(51) Int. Cl.: G01B 5/06, B65H 7/02

(54) **Verfahren und Vorrichtung zur Messung der Dicke von Druckereierzeugnissen, wie Zeitungen, Zeitschriften und Teilen hiervon**
Procedure and device to measure the thickness of printed matter, like papers, magazines and parts thereof
Procédé et dispositif pour mesurer l'épaisseur de produits d'imprimerie, comme des journaux, des revues ou similaires

(30) Priorität: 29.10.1993 CH 3269/93
(43) Veröffentlichungstag der Anmeldung: 03.05.1995
(73) Patentinhaber: Ferag AG, CH-8340 Hinwil (CH)
(72) Erfinder: Stauber, Hans-Ulrich, CH-8624 Grüt (CH); Grüninger, Baptist, CH-8332 Russikon (CH)
(74) Vertreter: Patentanwälte Schaad, Balass, Menzl & Partner AG

(56) Entgegenhaltungen:
- CH-A- 427 737
- IBM TECHNICAL DISCLOSURE BULLETIN, Bd.34, Nr.11, April 1992, ARMONK, NY, US. Seiten 310 - 311 'Thickness-sensing Gage'

## Beschreibung

Die vorliegende Erfindung betrifft ein Verfahren bzw. eine Vorrichtung zur Messung der Dicke von vorbeilaufenden, auf einer Auflage aufliegenden Druckereierzeugnissen, wie Zeitungen, Zeitschriften und Teilen hievon.

Die Messung der Dicke von Druckereierzeugnissen eignet sich besonders gut zum Feststellen derjenigen Erzeugnisse, die vorgängig nicht vollständig zusammengestellt worden sind, d.h. bei denen einzelne Seiten, Teile und/oder Beilagen fehlen. Geeignete Vorrichtungen zur Dickenmessung werden an verschiedenen Orten entlang der Produktionsstrassen zum Zusammenstellen von mehrblättrigen oder mehrteiligen Druckereierzeugnissen angeordnet, um immer wieder fehlerhafte Erzeugnisse erkennen und ausscheiden zu können. Als Beispiel einer solchen bekannten Dickenmessvorrichtung mag die in der EP-A-0 479 717 beschriebene Vorrichtung dienen.

Der vorliegenden Erfindung liegt nun die Aufgabe zugrunde, ein Verfahren bzw. eine Vorrichtung der eingangs genannten Art zu schaffen, das bzw. die es ermöglicht, die Dicke der Erzeugnisse auch bei hohen Bewegungsgeschwindigkeiten derselben sehr genau und mit hoher Empfindlichkeit messen zu können.

Diese Aufgabe wird erfindungsgemäss durch die Merkmale des kennzeichnenden Teils des Anspruches 1 bzw. des Anspruches 4 gelöst.

Die Dicke der Erzeugnisse wird nicht durch direkte Messung an den Erzeugnissen selber ermittelt sondern durch den Vergleich der Längen zweier mit grosser Genauigkeit mittels Laserstrahlen gemessener Strecken, nämlich einer ersten Strecke zwischen dem einen Sensor und der Auflage für die vorbeilaufenden Erzeugnisse und einer zweiten Strecke zwischen dem andern Sensor und der Oberseite eines auf der Auflage aufliegenden Erzeugnisses. Auf diese Weise lässt sich die Dicke der vorbeilaufenden Erzeugnisse sehr rasch und mit grosser Genauigkeit ermitteln. Die Messung der Dicke der Erzeugnisse wird vorzugsweise dazu verwendet, um unvollständig zusammengefügte Druckereierzeugnisse, bei denen also Seiten, Teile oder Beilagen fehlen, oder solche, die aus zuvielen Seiten, Teilen oder Beilagen bestehen, festzustellen.

Bevorzugte Weiterausgestaltungen des erfindungsgemässen Verfahrens bzw. der erfindungsgemässen Vorrichtung sind in den abhängigen Ansprüchen umschrieben.

Im folgenden wird der Erfindungsgegenstand anhand der Zeichnungen näher erläutert. Es zeigt rein schematisch:
- Fig. 1: in Seitenansicht und in vereinfachter Darstellung eine Messeinrichtung zum Messen der Dicke von rittlings auf den sattelförmigen Auflagen einer nur teilweise gezeigten Sammeltrommel aufliegenden Druckereierzeugnissen,
- Fig. 2: in gegenüber der Figur 1 vergrössertem Massstab einen Teil der Messeinrichtung und der Sammeltrommel,
- Fig. 3: einen Schnitt entlang der Linie III-III der Figur 2,
- Fig. 4: in Seitenansicht und in gegenüber der Figur 2 vergrössertem Massstab eine Abtasteinheit der Messeinrichtung während der Messphase,
- Fig. 5: einen Ausschnitt aus der Figur 4 in vergrössertem Massstab, das auf einem Erzeugnis aufliegende Tastelement zeigend, und
- Fig. 6: eine vereinfachte Darstellung der Messeinrichtung zur Erläuterung des Messprinzips.

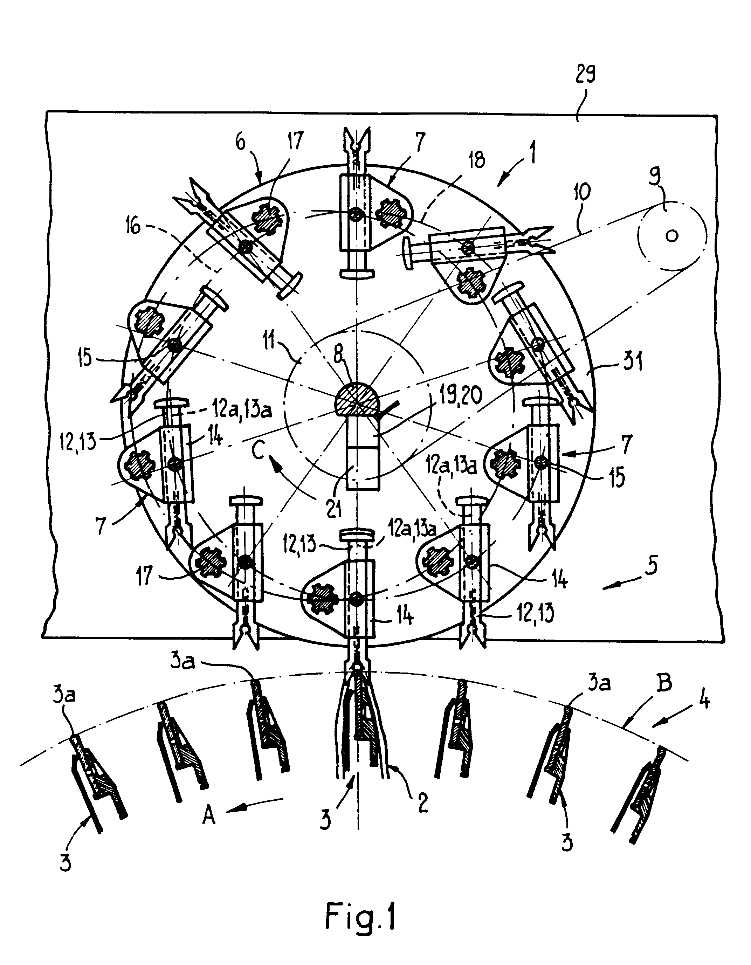

In Fig. 1 ist in Seitenansicht rein schematisch eine Messeinrichtung 1 zum Messen der Dicke von Druckereierzeugnissen 2, d.h. Zeitungen, Zeitschriften und Teilen hievon, gezeigt, die rittlings auf sattelförmigen Auflagen 3 einer nur teilweise dargestellten, an sich bekannten Sammeltrommel 4 aufliegen. Die zueinander parallelen Auflagen 3 rotieren um eine in Figur 1 nicht sichtbare Achse in Richtung des Pfeiles A und erstrecken sich quer zu dieser Drehrichtung A. Die auflageseitigen Enden der Auflagen 3 sind mit 3a bezeichnet. Diese Enden 3a bewegen sich während der Drehung der Sammeltrommel entlang einer kreiszylindrischen Bewegungsbahn B, deren Zentrum mit der Drehachse der Sammeltrommel 4 zusammenfällt.

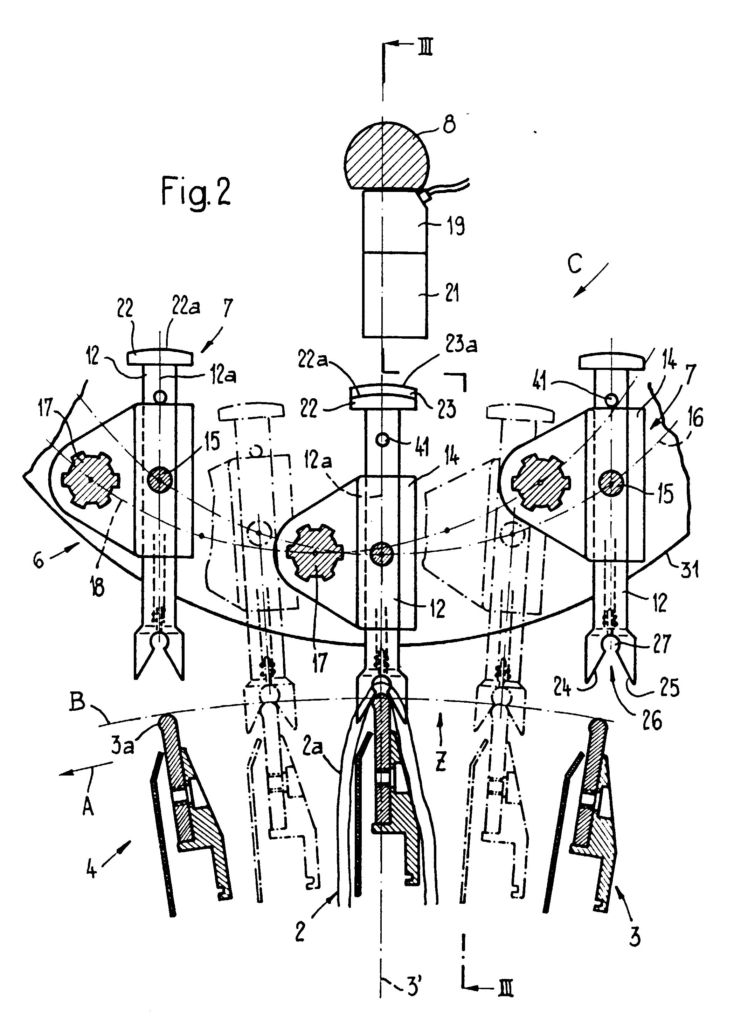

Die Messeinrichtung 1 weist ein an einer Messstation 5 angeordnetes Messrad 6 auf, dessen Aufbau anhand der Figuren 2-5 noch näher erläutert werden wird. Zum Messrad 6 gehören eine Anzahl von Abtasteinheiten 7, die um eine feststehende Achse 8 in Richtung des Pfeiles C umlaufend angetrieben sind. Die Anzahl der Abtasteinheiten 7 beträgt ein ganzzahliger Bruchteil der Anzahl Auflagen 3 der Sammeltrommel 4, so dass während der Rotation der Sammeltrommel 4 und des Messrades 6 jede Abtasteinheit 7 immer mit denselben Auflagen zusammentrifft. Beim vorliegenden Ausführungsbeispiel sind vierzig Auflagen 3 und zehn Abtasteinheiten 7 vorhanden.

Der Antrieb des Messrades 6 erfolgt von einer angetriebenen Riemenscheibe 9 über einen Antriebsriemen 10 und eine mit dem Messrad 6 drehfest verbundene zweite Riemenscheibe 11.

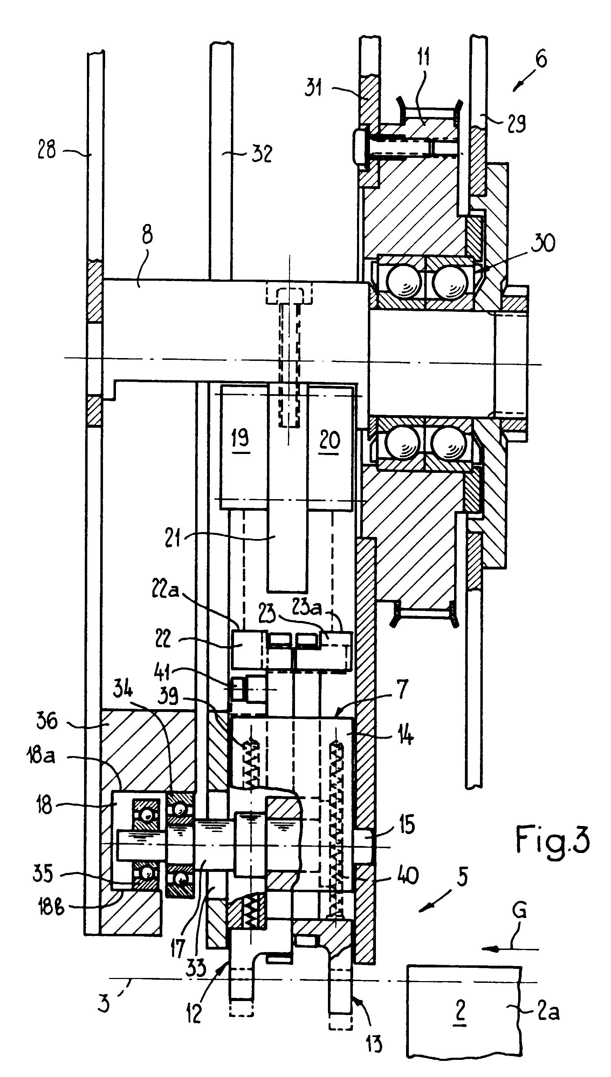

Jede Abtasteinheit 7 weist zwei in Längserstreckung der Auflagen 3 gesehen hintereinander angeordnete Tastelemente 12 und 13 auf (siehe Fig. 3). Diese Tastelemente 12, 13 sind in Richtung ihrer Längsachse 12a bzw. 13a verschiebbar in einer Halterung (Gehäuse) 14 geführt, wie das noch näher zu erläutern sein wird. Die Halterung 14 ist um eine Achse 15 verschwenkbar gelagert. Diese Achsen 15 bewegen sich während des Umlaufens des Messrades 6 entlang einer kreisförmigen Bahn 16. Die Halterungen 14 sind weiter mit Steuerwellen 17 fest verbunden, deren eines Ende in einer feststehenden Steuernut 18 geführt ist, deren Verlauf in Fig. 1 nur schematisch mit einer gestrichelten Linie angedeutet ist.

Mit jedem Tastelement 12, 13 wirkt ein Laser-Sensor 19 bzw. 20 zusammen. Diese Laser-Sensoren 19, 20 sind an der feststehenden Achse 8 befestigt und in Längserstreckung der Auflagen gesehen hintereinander angeordnet. Zwischen den Laser-Sensoren 19, 20 ist eine Abschirmplatte 21 vorgesehen, die an der Welle 8 festgeschraubt ist und an der die Laser-Sensoren 19, 20 befestigt sind (siehe Fig. 3). Als Sensoren 19, 20 können z.B. Laser-Sensoren verwendet werden, wie sie von der Omron Corporation unter der Produktebezeichnung Z4M vertrieben werden.

Anhand der Figuren 2-5 wird nun der Aufbau des Messrades 6 näher erläutert.

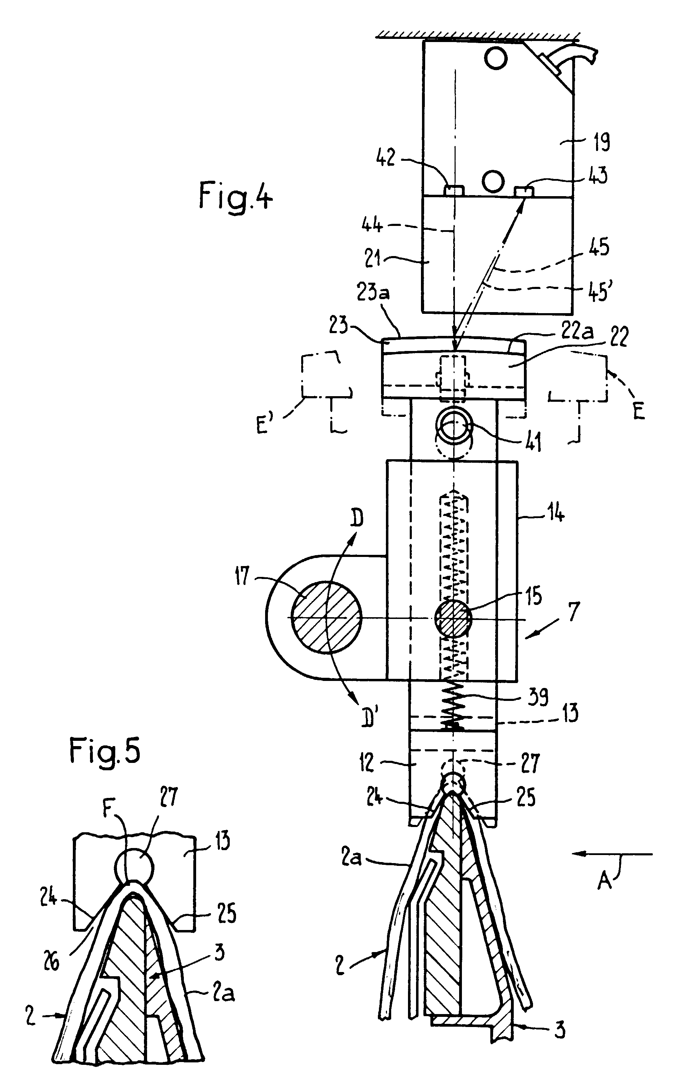

Jedes Tastelement 12, 13 weist am der Achse 8 zugekehrten Ende einen Kopf 22 bzw. 23 auf, der eine gewölbte Messfläche 22a bzw. 23a trägt. In der in den Figuren 2-4 gezeigten Messposition der Tastelemente 12, 13 sind diese Messflächen 22a, 23a dem zugeordneten Laser-Sensor 19 bzw. 20 zugekehrt (siehe Fig. 3). In dieser Messposition fluchten die Tastelemente 12, 13 in radialer Richtung mit der jeweils zugeordneten Auflage 3, d.h. die Längsachsen 12a, 13a der Tastelemente 12, 13 liegen in der Mittelebene 3' der zugeordneten Auflage 3 (Fig. 2). Die Wölbung der Messflächen 22a, 23a ist nun derart, dass sie in der Messposition der Tastelemente 12, 13 koaxial zur Bewegungsbahn B der auflageseitigen Enden 3a der Auflagen 3 ist. Der Grund hiefür wird im Zusammenhang mit der Figur 4 noch erläutert werden.

Am den Köpfen 22, 23 gegenüberliegenden, den Auflagen 3 zugekehrten Ende weist jedes Tastelement 12, 13 zwei V-förmig zueinander angeordnete Abstützflächen 24 und 25 auf, die eine Nut 26 mit V-förmigem Querschnitt festlegen. Am Grunde dieser Nut 26 ist eine Ausnehmung 27 mit im wesentlichen kreisförmigem Querschnitt angeordnet.

Wie aus Fig. 3 hervorgeht, ist die Achse 8 ortsfest in zwei Seitenwänden 28 und 29 gehalten. Die Riemenscheibe 11 ist mittels eines Kugellagers 30 auf dieser Achse 8 drehbar gelagert. Die Riemenscheibe 11 ist fest mit einer Lagerscheibe 31 verbunden, die zusammen mit einem in einem Abstand angeordneten Lagerring 32 zum Lagern der Abtasteinheiten 7 dient. Zu diesem Zweck sind die Schwenkachsen 15 der Halterungen 14 in diesen beiden Lagerelementen 31, 32 gelagert. Durch Oeffnungen 33 im Lagerring 32 hindurch erstrecken sich die wie erwähnt mit den Halterungen 14 fest verbundenen Steuerwellen 17 hindurch, die an ihrem freien Ende zwei Kugellager 34 und 35 tragen, die entlang je einer Steuerkurve 18a bzw. 18b der in einem Ring 36 ausgebildeten Steuernut 18 laufen.

Auf jedes der verschiebbar in der Halterung 14 gelagerten Tastelemente 12, 13 wirkt eine in der Halterung 14 untergebrachte Druckfeder 39 bzw. 40, die bestrebt ist, das zugeordnete Tastelement 12, 13 aus dem Gehäuse herauszudrücken. Am Tastelement 12 ist ein Anschlagbolzen 41 vorhanden, der bei nicht auf den Auflagen 3 aufsitzenden Tastelementen 12, 13 auf der Halterung 14 zur Anlage kommt und so die Strecke, um die die Tastelemente 12, 13 unter der Wirkung der Druckfedern 39, 40 aus der Halterung 14 herausgeschoben werden, begrenzt. Das Tastelement 13 ist mit dem andern Tastelement 12 über eine nicht näher dargestellte Mitnahmeverbindung (z. B. eine Keilverbindung) für eine gemeinsame Bewegung gekoppelt. Diese Mitnahmeverbindung ist aber derart ausgebildet, dass sich das Tastelement 13 entgegen der Wirkrichtung der Druckfeder 40 gegenüber dem andern Tastelement 12 verschieben kann.

Wie aus Fig. 4 hervorgeht, weist jeder Laser-Sensor 19, 20 einen Sender 42 und einen Empfänger 43 auf. Der vom Sender 42 emittierte Laserstrahl 44 wird an der Messfläche 22a bzw. 23a reflektiert und vom Empfänger 43 empfangen. In Fig. 4 ist der an der Messfläche 22a reflektierte Laserstrahl mit 45 und der an der Messfläche 23a reflektierte Laserstrahl mit 45' bezeichnet.

Bevor weiter auf die Figuren 4-6 eingegangen wird, wird die Funktionsweise der Messeinrichtung 1 erläutert.

Beim Drehen des Messrades 6 werden die Halterungen 14 durch die in der Steuernut 18 geführten Steuerwellen 17 in Richtung des Pfeiles D bzw. D' (Fig. 4) verschwenkt. Dieser Steuermechanismus für die Abtasteinheiten 7 ist nun so ausgebildet, dass die Halterungen 14 bzw. die Tastelemente 12, 13 beim Zulaufen in die Messzone Z (Fig. 2) immer mehr auf die ebenfalls in die Messzone Z gelangenden Auflagen 3 ausgerichtet werden, wie das aus Figur 1 und insbesondere aus Fig. 2 hervorgeht. Unter der Wirkung der Druckfedern 39, 40 sind die Tastelemente 12, 13 bis zum Anschlag des Anschlagbolzens 41 an der Halterung 14 ausgefahren, wie das anhand der Abtasteinheit 7 rechts aussen in Fig. 2 ersichtlich ist. In einer nächsten Phase, die durch die in Fig. 2 auf der rechten Seite strichpunktiert dargestellte Abtasteinheit dargestellt ist, kommen die Tastelemente 12, 13 mit der zugeordneten Auflage 3 bzw. dem auf dieser aufliegenden Druckereierzeugnis 2 in Berührung, ohne aber schon zurückgedrängt zu werden. Beim Weiterdrehen erfolgt das Zurückdrängen der Tastelemente 12, 13 durch die Auflage 3 bzw. das zu messende Druckereierzeugnis 2 entgegen der Wirkung der Druckfedern 39, 40, wie das durch die sich in der Messposition befindliche mittlere Abtasteinheit 7 in Fig. 2 dargestellt ist. Anschliessend beginnen sich die Auflage 3 und die Tastelemente 12, 13 wieder voneinander zu lösen, wie das auf der linken Seite der Figur 2 durch die beiden strichpunktiert und mit ausgezogenen Linien gezeigten Abtasteinheiten 7 dargestellt ist.

Wie vor allem aus den Figuren 4 und 5 deutlich hervorgeht, liegen die Tastelemente 12, 13 in der Messposition mit ihren schrägen Abstützflächen 24, 25 seitlich auf der Auflage 3 bzw. der Oberseite 2a des Druckereierzeugnisses 2 auf. Das hat einerseits eine Zentrierung der Tastelemente 12, 13 mit der Auflage 3 und andererseits eine Erhöhung der Messempfindlichkeit zur Folge. Wie aus Figur 5 hervorgeht, gelangen die Abstützflächen 24, 25 des Tastelementes 13 seitlich des Falzes F des Druckereierzeugnisses 2 auf diesem zur Auflage. Der Falz F kommt in die Ausnehmung 27 zu liegen. Es ist ohne weiteres erkennbar, dass auf diese Weise der Zustand des Falzes F keinen Einfluss auf die Messung hat.

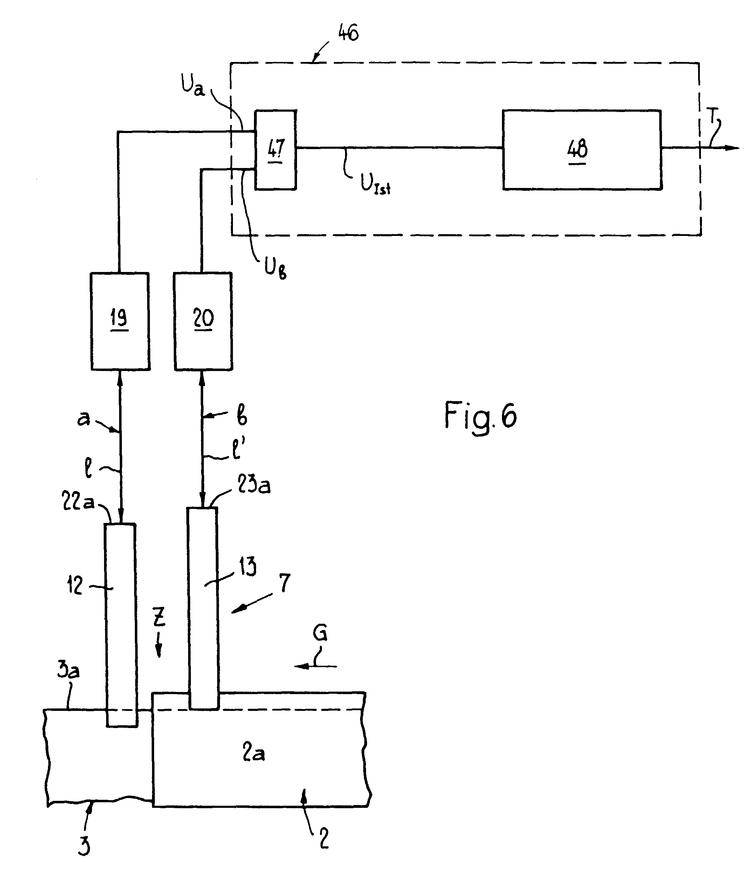

In der Messzone Z, d.h. bei sich in der Messposition befindlicher Abtasteinheit 7 liegt das Tastelement 12 auf der Auflage 3 und das Tastelement 13 auf der Oberseite 2a des zu messenden Druckereierzeugnisses 2 auf, wie das die Figuren 4 und 6 erkennen lassen. Das Tastelement 13 wird demzufolge stärker zurückgedrängt als das Tastelement 12. In der Messposition der Abtasteinheit 7 werden nun die Strecken zwischen der Messfläche 22a des Tastelementes 12 und dem zugeordneten Laser-Sensor 19 einerseits und der Messfläche 23a des Tastelementes 13 und dem zugeordneten Laser-Sensor 20 andererseits gemessen. In der Figur 6 sind die entsprechenden Strecken mit a bzw. mit b bezeichnet. Die Länge der Strecke a ist mit l und diejenige der Strecke b mit l' angegeben. Jeder Laser-Sensor 19, 20 erzeugt ein Ausgangssignal Uₐ bzw. U_{b} (Fig. 6), das für die Länge l bzw. l' der Strecken a bzw. b kennzeichnend ist. Diese Ausgangssignale Uₐ und U_{b} werden einer Auswerteeinheit 46 zugeführt, welche einen Signalverarbeitungsteil 47 aufweist, in dem die Signale Uₐ und U_{b} miteinander verglichen werden. Der Signalverarbeitungsteil 47, der auch einen Kompensationsteil zum Kompensieren von gleichbleibenden, systembedingten Messungenauigkeiten aufweist, erzeugt ein Ausgangssignal U_{Ist}, das dem Unterschied der Längen l und l' entspricht und somit für die Dicke des gemessenen Erzeugnisses 2 kennzeichnend ist. Dieses Istwertsignal U_{Ist} wird nun dazu verwendet, unvollständige Druckereierzeugnisse 2 zu erkennen, d.h. solche, bei denen Seiten, Teile oder Beilagen fehlen, oder solche, die aus zuvielen Seiten, Teilen oder Beilagen bestehen. Zu diesem Zwecke wird das Istwertsignal U_{Ist} einer Vergleichseinheit 48 zugeführt, in der dieses Istwertsignal U_{Ist} mit einem vorgegebenen, eingespeicherten Sollwert verglichen wird. Stellt die Vergleichseinheit 48 dabei eine Differenz fest, die einen gegebenen Grenzwert überschreitet, so erzeugt sie ein Kennsignal T, das dazu verwendet wird, das als unvollständig erkannte Druckereierzeugnis 2 auszuscheiden.

Für eine genaue Messung müssen die Messverhältnisse während einer gewissen Zeitspanne gleich bleiben. Um dies auch bei schnellaufender Sammeltrommel, d.h. zum Beispiel bei Dickenmessungen an 40'000 Druckereierzeugnissen 2 pro Stunde, zu gewährleisten, werden die Abtasteinheiten 7, d.h. die Tastelemente 12, 13, durch den erläuterten Steuermechanismus des Messrades 6 während einer gewissen Zeit auf die zugeordnete Auflage 3 ausgerichtet gehalten. In dieser ausgerichteten Messposition der Abtasteinheiten 7 verlaufen die Messflächen 22a, 23a der Tastelemente 12, 13 wie bereits erwähnt koaxial zur Bewegungsbahn B der Auflageenden 3a bzw. der Erzeugnisse 2. Dies bedeutet, dass die Längen l, l' der Strecken a, b während einer gewissen Zeit, während der die Köpfe 22, 23 der Tastelemente 12, 13 an den ortsfesten Laser-Sensoren 19, 20 vorbeilaufen, konstant bleiben. So wird sichergestellt, dass die Messverhältnisse während der erforderlichen Messdauer gleich bleiben. In Fig. 4 sind gestrichelt die Positionen der Köpfe 22, 23 der Tastelemente 12, 13 am Anfang der Messphase (Position E) und am Ende der Messphase (Position E') angegeben.

Bezugnehmend auf die Figuren 3 und 6 wird noch darauf hingewiesen, dass die Erzeugnisse 2 entlang der Auflagen 3 in Richtung des Pfeiles G vorgeschoben werden.

Mit dem beschriebenen Aufbau der Messeinrichtung 1 ist es möglich, allfällige Fabrikationsungenauigkeiten, wie insbesondere Unregelmässigkeiten im Rundlauf der Sammeltrommel 4 und Ungenauigkeiten, die von der Herstellung der Auflagen 3 und des Messrades 6 herrühren, zu kompensieren. Zu diesem Zweck werden auf die beschriebene Weise an der drehenden Sammeltrommel 4 Messungen ohne Erzeugnisse durchgeführt, bei denen beide Tastelemente 12, 13 jeder Abtasteinheit 7 auf die zugeordnete Auflage 3 abgesetzt werden. Die so für jede Auflage 3 und die zugeordnete Abtasteinheit 7 ermittelten Messwerte werden in der Auswerteeinheit 46 gespeichert. Bei der nachfolgenden Dickenmessung werden diese Messwerte zur Kompensation im Signalverarbeitungsteil 47 verwendet.

Zur Ermittlung des Sollwertes der Dicke der zu messenden Erzeugnisse erfolgt vor dem eigentlichen Messvorgang eine Referenzdickenmessung an einer gewissen Anzahl von vollständig zusammengestellten Erzeugnissen. Aus den so ermittelten Dickenreferenzwerten wird dann der Dickensollwert ermittelt und in der Vergleichseinheit 48 gespeichert.

Das vorstehend anhand der Messeinrichtung 1, die mit einer Sammeltrommel 4 zusammenwirkt, beschriebene Dickenmessprinzip lässt sich auch bei andern Sammelvorrichtungen anwenden, wie sie z.B. in der EP-A-0 095 603 und der EP-A-0 346 578 beschrieben sind. Bei derartigen Sammelvorrichtungen bewegen sich die hintereinander angeordneten, sich quer zur Bewegungsrichtung erstreckenden Auflagen geradlinig durch die Messstation hindurch. Dies bedeutet, dass die Bewegungsbahn der umlaufenden Abtasteinheiten der Messeinrichtung dieser geradlinigen Bewegungsbahn der Auflagen bzw. der Erzeugnisse angepasst werden muss. Im weitern sind die Tastelemente bzw. deren Köpfe mit ebenen Messflächen auszubilden. Im Messbereich verlaufen dann diese Messflächen parallel zur Bewegungsbahn der Auflagen bzw. Erzeugnisse.

Im weitern ist es auch möglich, mittels des beschriebenen Messprinzips die Dicke von flach auf einer ebenen Auflage aufliegenden Erzeugnisse zu messen. Es versteht sich, dass die Messeinrichtung dann entsprechend ausgebildet sein muss.

Das beschriebene Messprinzip kann auch zur Vollständigkeitskontrolle beim personalisierten oder regionalisierten Sammeln oder Einstecken eingesetzt werden.

Die vorstehend erläuterte Dickenmessung lässt sich weiter dazu verwenden, die Art von unterschiedlichen Druckereierzeugnissen, die sich in der Dicke voneinander unterscheiden, festzustellen.

## Patentansprüche

1. Verfahren zur Messung der Dicke von vorbeilaufenden, auf einer Auflage (3) aufliegenden Druckereierzeugnissen (2), wie Zeitungen, Zeitschriften und Teilen hievon, dadurch gekennzeichnet, dass zur Dickenmessung an jeweils einem Erzeugnis (2) einerseits mittels eines ersten, ortsfest angeordneten Laser-Sensors (19) die Länge (1) einer für den Abstand zwischen diesem ersten Laser-Sensor (19) und der als Referenzglied dienenden Auflage (3) kennzeichnenden Strecke (a) und andererseits mit Hilfe eines zweiten, ebenfalls ortsfest angeordneten Laser-Sensors (20) die Länge (l') einer für den Abstand zwischen diesem zweiten Laser-Sensor (20) und der der Auflage (3) abgekehrten Oberseite (2a) des Erzeugnisses (2) kennzeichnenden Strecke (b) festgestellt wird und dass anschliessend aus der Differenz der Längen (l, l') dieser beiden Strecken (a, b) die Dicke des Erzeugnisses (2) ermittelt wird.

2. Verfahren nach Anspruch 1, dadurch gekennzeichnet, dass die Länge (l, l') jeder Strecke (a, b) zwischen jedem Laser-Sensor (19, 20) und einer der Auflage (3) bzw. der Oberseite (2a) des Erzeugnisses (2) zugeordneten Messfläche (22a, 23a) mittels jeweils eines zugeordneten Tastelementes (12, 13) gemessen wird, das während der Messphase auf der Auflage (3) bzw. auf dem Erzeugnis (2) aufliegt, wobei sich die Tastelemente (12, 13) mit dem Erzeugnis (2) bzw. der Auflage (3) mitbewegen.

3. Verfahren nach Anspruch 1 oder 2, dadurch gekennzeichnet, dass zum Erfassen von nicht richtig zusammengestellten, mehrblättrigen oder mehrteiligen Erzeugnissen (2) die ermittelte Dicke eines Erzeugnisses mit einer Sollgrösse verglichen wird und bei einer einen Grenzwert überschreitenden Abweichung der gemessenen Istgrösse von der Sollgrösse ein Kennsignal (T) erzeugt wird.

4. Vorrichtung zur Messung der Dicke von an einer Messstation (5) vorbeilaufenden, auf einer Auflage (3) aufliegenden Druckereierzeugnissen (2), wie Zeitungen, Zeitschriften und Teilen hievon, gekennzeichnet durch zwei in der Messstation (5) ortsfest angeordnete, an eine nachgeschaltete Auswerteeinheit (46) angeschlossene, Laser-Sensoren (19, 20), von denen der erste Laser-Sensor (19) zur Messung der Länge (1) einer für den Abstand zwischen diesem ersten Laser-Sensor (19) und der als Referenzglied dienenden Auflage (3) kennzeichnenden Strecke (a) und der zweite Laser-Sensor (20) zur Messung der Länge (l') einer für den Abstand zwischen diesem zweiten Laser-Sensor (20) und der der Auflage (3) abgekehrten Oberseite (2a) des zu messenden Erzeugnisses (2) kennzeichnenden Strecke (b) dient, wobei in der Auswerteeinheit (46) aufgrund der von den Laser-Sensoren (19, 20) gelieferten Messwerte (Uₐ, U_{b}) aus der Differenz der Längen (l, l') der beiden Strecken (a, b) die Dicke des gemessenen Erzeugnisses (2) ermittelt wird.

5. Vorrichtung nach Anspruch 4, dadurch gekennzeichnet, dass wenigstens eine während der Messphase mit dem Erzeugnis (2) bzw. der Auflage (3) mitlaufende Abtasteinheit (7) vorgesehen ist, die zwei je einem Laser-Sensor (19, 20) zugeordnete Tastelemente (12, 13) aufweist, von denen während der Messphase das eine Tastelement (12) auf die Auflage (3) und das andere Tastelement (13) auf das Erzeugnis (2) aufsetzbar ist und von denen jedes Tastelement (12, 13) eine dem zugeordneten Laser-Sensor (19, 20) zugekehrte Messfläche (22a, 23a) aufweist, zwischen der und dem zugeordneten Laser-Sensor (19, 20) der Abstand (l, l') gemessen wird.

6. Vorrichtung nach Anspruch 5 zur Messung der Dicke von Erzeugnissen, die rittlings auf umlaufenden, hintereinander angeordneten und sich quer zur Umlaufrichtung erstreckenden sattelförmigen Auflagen aufliegen, dadurch gekennzeichnet, dass die Messflächen (22a, 23a) der Tastelemente (12, 13) während der Messphase im Bereich der Messstation (5) im wesentlichen parallel zur Bewegungsbahn (B) der Auflagen (3) bzw. der Erzeugnisse (2) verlaufen.

7. Vorrichtung nach Anspruch 6, dadurch gekennzeichnet, dass bei um eine gemeinsame Achse rotierenden Auflagen (3) während der Messphase die Tastelemente (12, 13) mit den Auflagen (3) in radialer Richtung fluchten und die Messflächen (22a, 23a) koaxial zur kreiszylindrischen Bewegungsbahn (B) der auflageseitigen Enden (3a) der Auflagen (3) verlaufen.

8. Vorrichtung nach einem der Ansprüche 5-7, zur Messung der Dicke von Erzeugnissen, die rittlings auf umlaufenden, hintereinander angeordneten und sich quer zur Umlaufrichtung erstreckenden sattelförmigen Auflagen aufliegen, dadurch gekennzeichnet, dass die Tastelemente (12, 13) an ihrem während der Messphase den Auflagen (3) zugekehrten Ende V-förmig zueinander angeordnete Abstützflächen (24, 25) aufweisen, die während der Messphase jeweils seitlich auf der Auflage (3) bzw. dem auf diesem aufliegenden Erzeugnis (2) zur Anlage kommen.

9. Vorrichtung nach Anspruch 8, dadurch gekennzeichnet, dass zumindest bei den auf den Erzeugnissen (2) zur Auflage kommenden Tastelementen (13) am Grund der durch die Abstützflächen (24, 25) festgelegten V-förmigen Nut (26) eine Ausnehmung (27) zur Aufnahme des Falzbereiches (F) der Erzeugnisse (2) während der Messphase vorhanden ist.

10. Vorrichtung nach einem der Ansprüche 5-9, dadurch gekennzeichnet, dass die Tastelemente (12, 13) gegen die Wirkung einer Rückstellkraft, die vorzugsweise durch ein Federelement (39, 40) erzeugt wird, zurückdrängbar in einer Halterung (14) gelagert sind.

11. Vorrichtung nach Anspruch 10, dadurch gekennzeichnet, dass das auf dem Erzeugnis (2) zur Auflage kommende Tastelement (13) mit dem andern Tastelement (12) für eine gemeinsame Bewegung gekoppelt ist, jedoch in Zurückdrängrichtung gegenüber letzterem verschiebbar ist.

12. Vorrichtung nach einem der Ansprüche 5-11, gekennzeichnet durch mehrere entlang einer geschlossenen Umlaufbahn umlaufende, je zwei Tastelemente (12, 13) aufweisende Abtasteinheiten (7), die nacheinander synchron mit jeweils einem Erzeugnis (2) die Messstation (5) durchlaufen.

13. Vorrichtung nach Anspruch 12, dadurch gekennzeichnet, dass bei entlang einer geschlossenen Umlaufbahn umlaufenden, hintereinander angeordneten und sich quer zur Umlaufrichtung erstreckenden Auflagen (3) die Anzahl der Abtasteinheiten (7) ein ganzzahliger Bruchteil der Anzahl der Auflagen (3) beträgt.

14. Vorrichtung nach einem der Ansprüche 4-13, dadurch gekennzeichnet, dass zum Erfassen von nicht richtig zusammengestellten mehrblättrigen oder mehrteiligen Erzeugnissen (2) die Auswerteeinheit (46) jeweils die ermittelte Dicke eines Erzeugnisses (2) mit einer eingespeicherten Sollgrösse vergleicht und bei einer einen vorgegebenen Grenzwert überschreitenden Abweichung der gemessenen Istgrösse von der Sollgrösse ein Kennsignal (T) erzeugt.

## Claims

1. A method for measuring the thickness of passing printed products, such as newspapers, magazines and parts thereof, lying on a support (3), characterized in that for the thickness measurement on one product (2) at a time, there is established, on the one hand, by means of a first laser sensor (19) arranged fixed in position, the length (l) of a distance (a) characteristic of the interspacing between this first laser sensor (19) and the support (3) serving as a reference element, and on the other hand, by means of a second laser sensor (20) also arranged fixed in position, the length (l') of a distance (b) characteristic of the interspacing between this second laser sensor (20) and the top (2a) of the product (2) remote from the support (3), and that subsequently, the thickness of the product (2) is determined from the difference of the lengths (l, l') of these two distances (a, b).

2. A method according to claim 1, characterized in that the length (l, l') of each distance (a, b) between each laser sensor (19, 20) and a measuring face (22a, 23a), associated with the support (3) or the top (2a) of the product (2), is measured in each case by means of one associated feeler element (12, 13) which bears during the measurement stage on the support (3) or on the product (2), in which arrangement the feeler elements (12, 13) move along with the product (2) or the support (3).

3. A method according to claim 1 or 2, characterized in that for detecting incorrectly assembled mulitsheet or multipart products (2), the determined thickness of a product is compared with a desired value, and an identification signal (t) is generated in the case of a deviation of the measured actual value from the desired value, which exceeds a threshold value.

4. A device for measuring the thickness of printed products, such as newspapers, magazines and parts thereof moving past a measurement station (5) and lying on a support (3),
characterized by two laser sensors (19, 20) fixed in position in the measurement station (5) and connected to an evaluation unit (46), disposed down the line, the first laser sensor (19) whereof serves to measure the length (l) of a distance (a) characteristic of the interspacing between this first laser sensor (19) and the support (3) serving as a reference element, and the second laser sensor (20) serves to measure the length (l') of a distance (b) characteristic of the interspacing between this second laser sensor (20) and the top (2a) of the product (2) to be measured, remote from the support (3), in which arrangement the thickness of the measured product (2) is determined in the evaluation unit (46) from the difference of the lengths (l, l') on the basis of the measured values (Uₐ, U_{b}) delivered by the laser sensors (19, 20).

5. A device according to claim 4, characterized in that at least one feeler unit (7) is provided which runs along with the product (2) or the support (3) during the measurement stage and has two feeler elements (12, 13) associated with one laser sensor (19, 20) each, one feeler element (12) whereof can during the measurement stage be positioned on the support (3), and the other feeler element (13) can be positioned on the product (2), and each feeler element (12, 13) whereof has a measuring face (22a, 23a) facing the associated laser sensor (19, 20), between which and the assigned laser sensor (19, 20), the distance (l, l') is measured.

6. A device according to claim 5 for measuring the thickness of products that lie astride on rotating ridge-shaped supports arranged one after the other and extending transversely to the direction of rotation, characterized in that the measuring faces (22a, 23a) of the feeler elements (12, 13) run during the measurement stage in the zone of the measurement station (5) substantially parallel to the movement path (B) of the supports (3) or of the products (2).

7. A device according to claim 6, characterized in that in the case of supports (3) rotating round a common axis, the feeler elements (12, 13) are aligned during the measurement stage with the supports (3) in the radial direction, and the measuring faces (22a, 23a) run coaxially with the circular-cylindrical movement path (B) of the ends (3a) on the bearing side of the supports (3).

8. A device according to one of claims 5 to 7 for measuring the thickness of products that lie astride on rotating ridge-shaped supports arranged one after the other and extending transversely to the direction of rotation, characterized in that the feeler elements (12, 13) have, at their ends facing the supports (3) during the measurement stage, supporting faces (24, 25) facing one another in a V-shaped configuration, which come during the measurement stage to bear in each case laterally on the support (3) or on the product (2) lying thereon.

9. A device according to claim 8, characterized in that at least in the feeler elements (13) coming to bear on the products (2), a cutout (27) is provided at the bottom of the groove (26), defined by the supporting faces (24, 25), for receiving the folded zone (F) of the products (2) during the measurement stage.

10. A device according to one of claims 5 to 9, characterized in that the feeler elements (12, 13) are mounted in a holding means (14), with scope for being pushed back against the action of a restoring force which is preferably generated by a spring element (39, 40).

11. A device according to claim 10, characterized in that the feeler element (13) coming to bear on the product (2) is coupled with the other feeler element (12) for common movement, but can be displaced relative to the latter in the pushing-back direction.

12. A device according to one of claims 5 to 11, characterized by several feeler units (7) rotating along a closed rotational path, having two feeler elements (12, 13) each, which units pass one after another through the measurement station (5) synchronously with one product (2) at a time.

13. A device according to claim 12, characterized in that in the case of supports (3) rotating along a closed path of rotation, arranged one after another, and extending transversely to the direction of rotation, the number of the feeler units (7) amounts to an integral fraction of the number of supports (3).

14. A device according to one of claims 4 to 13, characterized in that for detecting incorrectly assembled multisheet or multipart products (2), the evaluation unit (46) compares in each case the determined thickness of a product (2) with a stored desired value, and generates an identification signal (T) in the case of a deviation of the measured actual value from the desired value, which exceeds a threshold value.

## Revendications

1. Procédé pour mesurer l'épaisseur de produits d'imprimerie (2) tels que des journaux, des revues et des parties de ces derniers, reposant sur un support (3) et défilant, caractérisé en ce que pour mesurer l'épaisseur d'un produit respectif, d'une part la longueur (1) d'un segment (a) identifiant la distance entre un premier capteur laser (19) et le support (3) servant d'élément de référence est établie à l'aide de ce premier capteur laser (19) disposé de manière fixe et d'autre part la longueur (l') d'un segment (b) identifiant la distance entre un second capteur laser (20) et le côté supérieur (2a) - éloigné du support (3) - du produit est établie à l'aide de ce second capteur laser (20) disposé également de manière fixe et en ce que l'épaisseur du produit (2) est déterminée ensuite à partir de la différence des longueurs (l, l') de ces deux segments (a, b).

2. Procédé selon la revendication 1, caractérisé en ce que la longueur (l, l') de chaque segment (a, b) entre chaque capteur laser (19, 20) et une surface de mesure affectée au support (3) et au côté supérieur (2a) du produit (2) est mesurée à l'aide respectivement d'un élément palpeur (12, 13) qui pendant la phase de mesure, est placé sur le support (3) ou sur le produit (2), les éléments palpeurs (12, 13) se déplaçant avec le produit (2) ou le support (3).

3. Procédé selon la revendication 1 ou la revendication 2, caractérisé en ce que pour détecter des produits (2) assemblés de manière incorrecte, à plusieurs feuilles ou en plusieurs parties, l'épaisseur déterminée d'un produit est comparée à une grandeur théorique et un signal d'identification (T) est généré dans le cas où la grandeur réelle mesurée diverge de la grandeur théorique et dépasse une valeur limite.

4. Dispositif pour mesurer l'épaisseur de produits d'imprimerie (2) tels que des journaux, des revues et des parties de ces derniers, reposant sur un support (3) et défilant sur une station de mesure (5) , caractérisé par deux capteurs laser (19, 20) disposés de manière fixe dans la station de mesure (5) et reliés à une unité d'analyse (46) placée après, le premier capteur laser (19) permettant de mesurer la longueur (l) d'un segment (a) identifiant la distance entre ce premier capteur laser (19) et le support (3) servant d'élément de référence et le second capteur laser (20) permettant de mesurer la longueur (l') d'un segment (b) identifiant la distance entre ce second capteur laser (20) et le côté supérieur (2a) - éloigné du support (3) - du produit (2) à mesurer et l'épaisseur du produit (2) mesuré étant déterminée dans l'unité d'analyse (46), à partir de la différence des longueurs (l, l') de ces deux segments (a, b), sur la base des valeurs mesurées (Uₐ, U_{b}) fournies par les capteurs laser (19, 20).

5. Dispositif selon la revendication 4, caractérisé en ce qu'il est prévu au moins une unité de balayage (7) se déplaçant pendant la phase de mesure avec le produit (2) et le support (3) et qui présente deux éléments palpeurs (12, 13) affectés respectivement à un capteur laser (19, 20), l'un des éléments palpeurs (12) pouvant être posé sur le support (3) et l'autre élément palpeur (13) sur le produit (2) pendant la phase de mesure et chaque élément palpeur (12, 13) présentant une surface de mesure (22a, 23a) adjacente au capteur laser (19, 20) correspondant, ce qui permet de mesurer la distance (l, l') entre cette surface de mesure et le capteur laser (19, 20) correspondant.

6. Dispositif selon la revendication 5 pour mesurer l'épaisseur de produits qui sont placés à cheval sur des supports rotatifs, disposés l'un derrière l'autre, en forme de selle et s'étendant transversalement par rapport au sens de rotation, caractérisé en ce que pendant la phase de mesure, les surfaces de mesure (22a, 23a) des éléments palpeurs (12, 13) sont sensiblement parallèles à la trajectoire (B) des supports (3) et des produits (2) dans la zone de la station de mesure (5).

7. Dispositif selon la revendication 6, caractérisé en ce que pour des supports (3) en rotation autour d'un axe commun, pendant la phase de mesure, les éléments palpeurs (12, 13) sont alignés avec les supports dans le sens radial et les surfaces de mesure (22a, 23a) sont coaxiales par rapport à la trajectoire (B) cylindrique circulaire des extrémités (3a) - situées du côté des supports - des supports (3).

8. Dispositif selon l'une quelconque des revendications 5-7 pour mesurer l'épaisseur de produits qui sont placés à cheval sur des supports rotatifs, disposés l'un derrière l'autre, en forme de selle et s'étendant transversalement par rapport au sens de rotation, caractérisé en ce que les éléments palpeurs (12, 13) présentent sur leur extrémité adjacente aux supports (3) pendant la phase de mesure, des surfaces d'appui (24, 25) disposées en V l'une par rapport à l'autre et qui, pendant la phase de mesure, prennent appui respectivement latéralement sur le support (3) et le produit (2) reposant sur ce dernier.

9. Dispositif selon la revendication 8, caractérisé en ce que au moins pour les éléments palpeurs (13) prenant appui sur les produits (2) il existe sur le fond de la gorge (26) en V fixée par les surfaces d'appui (24, 25), un creux (27) pour loger la zone de pliage (F) des produits (2) pendant la phase de mesure.

10. Dispositif selon l'une quelconque des revendications 5-9, caractérisé en ce que les éléments palpeurs (12, 13) sont disposés dans un support (14) en pouvant être refoulés à l'encontre de l'action d'une force de rappel qui est générée de préférence par un élément à ressort (39, 40).

11. Dispositif selon la revendication 10, caractérisé en ce que l'élément palpeur (13) prenant appui sur le produit (2) est couplé avec l'autre élément palpeur (12) pour un mouvement commun mais néanmoins peut être déplacé par rapport à l'autre élément palpeur dans le sens du refoulement.

12. Dispositif selon l'une quelconque des revendications 5-11, caractérisé par plusieurs unités de balayage (7) en rotation le long d'un circuit de rotation fermé, qui présentent respectivement deux éléments palpeurs (12, 13) et parcourent la station de mesure (5) l'une derrière l'autre en synchronisation avec respectivement un produit (2).

13. Dispositif selon la revendication 12, caractérisé en ce que pour des supports (3) tournant le long d'une orbite fermée, disposés l'un derrière l'autre et s'étendant transversalement par rapport au sens de rotation, le nombre d'unités de balayage (7) est une fraction entière du nombre de supports (3).

14. Dispositif selon l'une quelconque des revendications 4-13, caractérisé en ce que pour détecter des produits (2) assemblés de manière incorrecte, à plusieurs feuilles ou en plusieurs parties, l'unité d'analyse (46) compare respectivement l'épaisseur déterminée d'un produit (2) à une grandeur théorique mémorisée et génère un signal d'identification (T) dans le cas où la grandeur réelle mesurée diverge de la grandeur théorique et dépasse une valeur limite prédéfinie.
